(19) Europäisches Patentamt
European Patent Office
Office européen des brevets

(11) Veröffentlichungsnummer: **0 013 402**
**B1**

(12) # EUROPÄISCHE PATENTSCHRIFT

(45) Veröffentlichungstag der Patentschrift: **21.04.82**

(51) Int. Cl.³: **C 08 G 77/42,** C 08 G 77/38, C 08 G 8/28, C 08 G 81/02, C 08 J 5/14

(21) Anmeldenummer: **79105301.0**

(22) Anmeldetag: **21.12.79**

(54) **Siloxanmodifizierte Novolake, deren Herstellung und Verwendung zur Herstellung von Reibbelägen.**

(30) Priorität: **04.01.79 DE 2900185**

(43) Veröffentlichungstag der Anmeldung: **23.07.80 Patentblatt 80/15**

(45) Bekanntmachung des Hinweises auf die Patenterteilung: **21.04.82 Patentblatt 82/16**

(84) Benannte Vertragsstaaten: **AT BE DE FR GB IT NL**

(56) Entgegenhaltungen:
**DE-B-1 006 619**
**FR-A-2 176 931**
**FR-A-2 217 376**
**FR-A-2 322 163**
**GB-A-766 623**
**US-A-2 920 058**
**RAPRA ABSTRACTS, Band 16, Nr. 1, 1. Januar 1979, erste Spalte, Zusammenfassung Nr. 7 725 759 L V. A. SERGEEV: »Synthesis and some properties of phenol-organosilicon oligomers«.**

(73) Patentinhaber: **BAYER AG, Zentralbereich Patente, Marken und Lizenzen, D-5090 Leverkusen 1, Bayerwerk (DE)**

(72) Erfinder: **Schmidt, Manfred, Dr., Bodelschwinghstrasse 20, D-4150 Krefeld (DE)**
Erfinder: **Fries, Hermann, Dr., Am Katterbach 60, D-5060 Bergisch-Gladbach 2 (DE)**
Erfinder: **Esch, Erich, Clemens-Winkler-Strasse 7, D-5090 Leverkusen 1 (DE)**

**EP 0 013 402 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Siloxanmodifizierte Novolake, deren Herstellung und Verwendung zur Herstellung von Reibbelägen

Die Erfindung betrifft siloxanmodifizierte Novolake, deren Herstellung und Verwendung zur Herstellung von Reibbelägen.

Die Verwendung von Novolaken zur Herstellung von Reibbelägen ist bekannt (vgl. Gummi, Asbest, Kunststoffe 9, (1978) Jahrgang 31, S. 666—670). Solche Harze dienen zum Verleimen der zahlreichen Füllstoffe und Zuschläge und ermöglichen die anschließende Aushärtung der Formmassen durch Erhitzen.

Hochtemperaturbeständige Formkörper wie Reibbeläge, die vorzugsweise zur Herstellung von Kupplungs- und Bremsbelägen Anwendung finden, sollen eine möglichst hohe Zersetzungstemperatur und eine geringe Abdampfrate thermischer Zerfallsprodukte aufweisen. Als Hochtemperaturbereich wird im allgemeinen der Bereich von 250—800° C verstanden. Die Wirksamkeit von Reibbelägen und deren Funktionsdauer wird drastisch reduziert durch einen hohen Anteil flüchtiger Crackprodukte wie hauptsächlich Benzol, Toluol, Xylol, Phenol, Kresol sowie durch auftretende Forminstabilität (Ausbrechen von Reibbelagsbruchstücken) bei Hochtemperaturbelastung.

Nach der in DE-OS 2 306 463 beschriebenen Verfahrensweise können durch Abmischen von Phenol-Formaldehyd-Harzen und Polysiloxanen in Lösung sowie anschließendes Aushärten der Formteile nach Entfernen des Lösungsmittels hochtemperaturbeständige Formkörper erhalten werden, aus denen Reibbeläge gefertigt werden können.

Die so erhaltenen Reibbeläge zeigen jedoch bei Hochtemperaturbelastung im Vergleich zu Reibbelägen, die auf Basis von Phenolnovolaken gefertigt wurden, ein vermehrtes Ausbrechen von Teilen des Reibbelagsformstückes, das offenbar verursacht wird durch einen ungenügenden Verbund der niedermolekularen Komponenten des Novolakes und des Silikonharzes im Reibbelagsformstück.

Aufgabe der Erfindung ist es, diese Zersetzung hochtemperaturbeanspruchter Phenol- und/oder Kresol-Formaldehydharze durch eine geeignete chemische Modifizierung derselben deutlich zu vermindern und durch Verbesserung der Elastizität, Weiterreißfestigkeit und Zugfestigkeit deren Formstabilität bei Hochtemperaturbelastung zu erhöhen.

Es wurde gefunden, daß sich Phenol- und/oder Kresol-Formaldehydharze vom Novolaktyp mit Alkoxi-, Alkylaryloxi- oder Aryloxi-endgruppenhaltigen Polysiloxanen unter sauer katalytischen Bedingungen unter Alkohol- oder Phenolabspaltung zu siloxanmodifizierten Novolaken umsetzen lassen, die einerseits gut konfektionierbar sind und gleichzeitig hochtemperaturbeständige Formmassen mit verbesserter Elastizität, verbesserter Weiterreiß- sowie Zugfestigkeit ergeben. Diese erfindungsgemäßen Harze lassen sich zu Reibbelagsqualitäten verarbeiten, die bei Hochtemperaturbelastung zusätzlich eine wesentlich verbesserte Geräuschedämpfung sowie ausgezeichnete Formstabilität aufweisen.

Gegenstand der Erfindung ist somit ein Novolak enthaltendes Polysiloxan der Formel

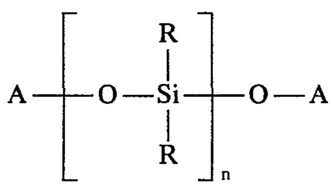

in der

A gleich oder verschieden einen Novolakrest, eine $C_1—C_8$-Alkyl-, eine $C_6—C_{12}$-Aryl- und/oder eine $C_7—C_{12}$ Alkylarylgruppe darstellt, wobei der Novolakrest mindestens einmal vorhanden sein muß,

R gleich oder verschieden eine $C_1—C_8$-Alkyl-, eine $C_6—C_{18}$-Cycloalkylgruppe, und/oder eine $C_6—C_{12}$ Aryl- und/oder $C_7—C_{12}$ Alkylarylgruppe bedeutet und

n Zahlen von 3 bis 100 darstellt.

Ein weiterer Gegenstand der Erfindung ist ein Verfahren zur Herstellung des einen Novolak enthaltenden Polysiloxans welches dadurch gekennzeichnet ist, daß man ein $C_1—C_8$-Alkyloxi-, $C_6—C_{12}$-Aryloxi- und/oder $C_7—C_{12}$ Alkylaryloxigruppen enthaltendes Polysiloxan mit einem Phenol- und/oder Kresol-Formaldehydharz vom Novolaktyp in Gegenwart eines sauren Umesterungskatalysators bei Temperauren von 110—180°C umsetzt, wobei das Polysiloxan in Mengen von 20—120 Gew.-Teilen bezogen auf 100 Gew.-Teile Novolak eingesetzt wird, und man die entstehenden flüchtigen Anteile abdestilliert.

Ein weiterer Gegenstand der Erfindung ist die Verwendung der erfindungsgemäßen Polysiloxane zur Herstellung von Reibbelägen.

In der angegebenen Formel bedeuten A und R einen $C_1—C_8$-Alkylrest wie beispielsweise Methyl, Äthyl, Propyl, n-, iso-, tert.-Butyl, n-, iso-Pentyl, n-, iso-Hexyl, n-, iso-Heptyl und n-, iso-Octyl;
einen $C_6—C_{12}$-Arylrest wie beispielsweise Phenyl, $\alpha$-Naphthyl;

einen $C_7-C_{12}$-Alkylarylrest wie beispielsweise Tolyl, p-tert. Butylphenyl, n-, iso-Hexylpenyl; und/oder einen Novolakrest.

R kann darüber hinaus noch eine $C_6-C_{18}$ Cycloalkylgruppe darstellen.

Als Novolakrest sowie als Novolakharz, welches bei dem Herstellungsverfahren eingesetzt wird kommen Phenol- und/oder Kresol-Formaldehydharze in Betracht, die durch Umsetzung von Phenolen und/oder Kresolen mit beispielsweise wäßrigen Formaldehydlösungen im Molverhältnis 1 : 1,05 bis 1 : 1,4 in Gegenwart eines sauren Katalysators in bekannter Weise hergestellt werden (vgl. Ullmanns Encyclopädie der techn. Chemie, Bd. 13, S. 459, Verlag: Urban & Schwarzenberg, München-Berlin, 1962).

Die Bindung des Harzes an das Polysiloxan erfolgt bevorzugt über eine Hydroxymethylengruppe, aus der bei Reaktion ein Wasserstoff abgespalten wird. Die im Harz vorhandenen Phenolgruppen sind reaktionsträger und setzen sich daher gegebenenfalls erst gegen Ende der Reaktion um.

Zur Herstellung der erfindungsgemäßen Polysiloxane wird ein Polysiloxan folgender Formel eingesetzt:

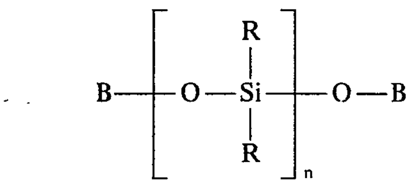

In der Formel bedeuten

B gleich oder verschieden einen $C_1-C_8$-Alkyl, $C_6-C_{12}$-Aryl oder $C_7-C_{12}$-Alkylarylrest,
R einen $C_1-C_8$-Alkyl oder $C_6-C_{18}$-Cycloalkyl oder $C_6-C_{12}$-Aryl und/oder $C_7-C_{12}$-Alkylarylrest,
n Zahlen von 3 bis 100.

Diese Polysiloxanharze können in einem Lösungsmittel wie Benzol, Toluol und Xylol gelöst sein, kommen jedoch vorzugsweise lösungsmittelfrei zum Einsatz. Diese lösungsmittelfreien Polysiloxane sind Flüssigkeiten und weisen eine Viskosität von 40—20 000 $\frac{mm^2}{sec}$ auf (gemessen bei 20° C).

Derartige Polysiloxanharze lassen sich nach literaturbekannten Verfahren herstellen, beispielsweise durch gezielte Hydrolyse von Silanen der allgemeinen Struktur $(R_2)\ Si(X)_2$, wobei R bereits eingangs definiert ist, und X beispielsweise für Chlor und/oder O-Alkyl mit 1—8 Kohlenstoffatomen stehen kann, und wobei die Hydrolyse gegebenenfalls in Gegenwart von organischen Lösungsmitteln wie Toluol oder Xylol und gegebenenfalls in Gegenwart von Alkali oder Säure und einer geeigneten Menge kettenabbrechender $C_1-C_8$-Hydroxyalkyle oder $C_6-C_{12}$-Hydroxyarylen oder $C_7-C_{12}$-Hydroxyalkylaryle ausgeführt wird (vgl. z. B. W. Noll, »Chemie und Technologie der Silicone«, Verlag Chemie GmbH, Weinheim/Bergstraße 1968, Seiten 162—171).

Bezüglich der eingesetzten Novolake wird auf obige Ausführungen verwiesen.

Die Menge des bei der Umsetzung eingesetzten Polysiloxans beträgt bevorzugt 30—80 Gew.-Teile bezogen auf 100 Gew.-Teile des Novolaks.

Die Umsetzung erfolgt bevorzugt in Gegenwart von 0,0001—0,5 Gew.-% eines sauren Umesterungskatalysators (bezogen auf das Gesamtgewicht des Reaktionsgemisches) wie z. B. einer organischen oder anorganischen Säure wie Oxalsäure, Ameisensäure, Essigsäure, Trichlor- oder Trifluoressigsäure, Benzolsulfonsäure, p-Toluolsulfonsäure, Salzsäure, Schwefelsäure, Phosphorsäure oder einer Lewissäure wie Aluminiumchlorid, Eisen-III-Chlorid, Zinkchlorid, Antimon-III-chlorid, Germaniumdioxid oder Zinkoxid.

Die Umsetzungstemperatur beträgt bevorzugt 130—170° C. Das Abdestillieren des bei der Umsetzung abgespaltenen »B-Restes« erfolgt bei Normaldruck, zweckmäßigerweise jedoch bei einem Vakkum von 1—500 mbar.

Das flüssige erfindungsgemäße Harz wird aus dem Reaktionsgefäß abgelassen, zweckmäßigerweise über ein Pastellierband oder eine Kühlwalze aufgearbeitet und kann anschließend vermahlen werden.

Die so erhaltenen erfindungsgemäßen Harze besitzen im allgemeinen einen Erweichungspunkt von 60—110° C, vorzugsweise jedoch von 70—100° C (nach DIN 53 180 gemessen). Sie zeigen ein höheres durchschnittliches Molekulargewicht (osmometrisch gemessen) als die zur Reaktion eingebrachten Komponenten. So resultiert beispielsweise aus der Umsetzung eines Novolakes mit einem Molekulargewicht von $\overline{M}_{os}=530$ mit einem methoxyendgruppenhaltigem Polysiloxan mit $\overline{M}_{os}=510$ ein Endprodukt mit $\overline{M}_{os}=760$. Durch diese Molekulargewichtsanalyse kann die chemische Umsetzung des Novolakes mit dem Polysiloxan auf einfachem Wege überprüft und nachgewiesen werden.

Um Reibbeläge herzustellen, werden die erhaltenen erfindungsgemäßen Harze mit anorganischen und/oder organischen Füllstoffen wie Metallen und/oder Metalloxiden, Flußspat, Asbest, Kieselsäure,

Butyl-, Nitril- und/oder Chloroprenkautschuk in Gegenwart von formaldehydabspaltenden Substanzen wie Hexamethylentetramin, Trioxi- oder Tetraoximethylen auf industriell üblichen Mischaggregaten wie Knetern oder Innenmischern, bevorzugt bei Temperaturen von 60 bis 150°C, innig vermischt. Der Zusatz von formaldehydabspaltenden Substanzen erfolgt in Gewichtsmengen von 4—16 Gew.-%, vorzugsweise von 7—14 Gew.-%, bezogen auf 100 Gew.-Teile des erfindungsgemäßen Harzes.

Die so erhaltenen Mischungen werden im allgemeinen bei 140°C bis 180°C, insbesondere bei 140° bis 160°C, gegebenenfalls unter einem Druck von 150 bis 250 bar zu Reibbelägen verpreßt (vgl. Vieweg/Becker »Kunststoffhandbuch«, Bd. 10, Duroplaste, S. 93—95, Carl Hanser Verlag, München, 1968).

Die thermischen Eigenschaften der erhaltenen Formkörper werden anhand der Tabelle 1 demonstriert, die Angaben über den durch Thermogravimetrie unter Stickstoff bestimmten Gewichtsverlust von 2 Harzproben enthält (Aufheizrate: 20°C/Min.).

Tabelle 1

Thermogravimetrische Analyse

| | Gewichtsverlustangaben in Gew.-% | |
|---|---|---|
| Temp. (°C) | Harz 1*) | Harz 2**) |
| 100 | 4,0 | 0,5 |
| 150 | 4,5 | 0,7 |
| 200 | 5,0 | 1,1 |
| 250 | 5,5 | 1,3 |
| 300 | 6,0 | 1,7 |
| 350 | 6,6 | 2,0 |
| 400 | 7,5 | 2,4 |
| 450 | 11,0 | 2,8 |
| 500 | 15,5 | 3,5 |
| 550 | 22,4 | 6,0 |
| 600 | 28,0 | 8,5 |
| 650 | 33,2 | 12,6 |
| 700 | 37,0 | 14,0 |
| 750 | 40,1 | 16,1 |
| 800 | 42,4 | 17,2 |

*) Harz 1: Phenolformaldehyd-Harz ($\bar{M}_{os}$ = 530) mit 12 Gew.-% Hexamethylentetramin abgemischt.

**) Harz 2: Siloxan modifizierter Novolak gemäß Beispiel 1 mit 12 Gew.-% Hexamethylentetramin abgemischt.

Die Erfindung wird durch den nachstehenden Beispiele näher erläutert.

Beispiel 1

Eingesetzt werden 660 g eines Novolakes, der aus Phenol und Formaldehyd im Molverhältnis 1 : 1,08 in bekannter Weise in Gegenwart eines sauren Katalysators wie Oxalsäure hergestellt wurde und ein Molgewicht von $\overline{M}_{os}=530$ sowie eine OH-Zahl von 535 aufweist (vgl. Ullmanns Encyclopädie der technischen Chemie, 13. Bd., S. 459, Verlag: Urban Schwarzenberg, München-Berlin, 1962).

Dieser Novolak wird zusammen mit 330 g eines methoxyendgruppenhaltigen Polydiphenylsiloxans umgesetzt, das folgende Kenndaten aufweist:

$\overline{M}_{os}=510$

Viskosität (DIN 53 015): 110 $\frac{mm^2}{sec}$,

Gew.-% Methoxygruppen: 14—16

Die Umsetzung wird bei 160°C in Gegenwart von 0,002 Gew.-% p-Toluolsulfonsäure (bezogen auf das Gesamtgewicht des Reaktionsgemisches) ausgeführt. Man läßt 1 Stunde bei 160°C unter Stickstoffatmosphäre und unter intensivem Rühren reagieren und destilliert anschließend bei einem Druck von 350—10 mbar 36,5 g Methanol ab. Gleichzeitig werden auch 3,0 g Phenol und Wasser destillativ enfernt.

Das flüssige Harz wird anschließend aus dem Reaktionsgefäß entnommen und nach dem Erkalten gemahlen. Das Produkt besitzt folgende Kenndaten:

Ep. (nach DIN 53 180): 89°C,
$\overline{M}_{os}=760$
OH-Zahl = 330
Siliciumgehalt: 6,2%

Das nach Beispiel 1 hergestellte Harz wurde gemahlen, mit 12 Gew.-% Hexamethylentetramin abgemischt und thermogravimetrisch untersucht (vgl. Harz 2 der Tab. 1).

Die aus dem Harz nach Beispiel 1 hergestellten Reibbeläge zeigen bei Temperaturen über 300°C neben der beispielhaft in Tab. 1 aufgezeigten wesentlich niedrigeren Abdampfrate an niedermolekularen Verbindungen eine erhöhte Elastizität, Weiterreiß- sowie Zugfestigkeit und eine höhere Härte als die Reibbeläge aufweisen, die auf Basis eines Phenol-Formaldehyd-Harzes oder die auf Basis einer Abmischung aus Polysiloxan und Phenolharz hergestellt wurden (vgl. Tab. 2).

Tabelle 2 beinhaltet einen Eigenschaftsvergleich von Reibbelagsmischungen, die

A) auf Basis einer Abmischung aus Acrylnitril-Butadien-Copolymerisat und einem Phenolformaldehyd-Novolak mit einem durchschnittlichen Molekulargewicht von $\overline{M}_{os}=530$ und einer OH-Zahl von 535 hergestellt wurden, die
B) auf Basis einer Mischung aus Acrylnitril-Butadien-Copolymerisat und einem erfindungsgemäßen siloxanmodifiziertem Novolak gemäß dem Harz aus Beispiel 1 hergestellt wurden und die
C) auf Basis einer Mischung aus Acrylnitril-Butadien-Copolymerisat und einer Phenolnovolak-Siliconharzmischung gemäß dem Harz 4 der DE-OS 2 306 463 hergestellt wurden.

Dieses Gemisch aus Phenolnovolak und Siliconharz gemäß Harz 4 der DT-OS 2 306 463 wird folgendermaßen hergestellt:

33 Gew.-% (bezogen auf Feststoff) eines Methylsiliconharzes mit einem 3 Mol-%-Anteil an Phenylsiloxan, vorliegend als 51 Gew.-%ige Lösung in Xylol, das eine Viskosität von 40—60 $\frac{mm^2}{sec}$, gemessen bei 20°C, besitzt, wird gemischt mit 60 Gew.-% eines Phenolnovolakes vom Molgewicht $\overline{M}_{os}=530$ und einer OH-Zahl von 535.

Dieses Gemisch wird mit dem obengenannten Acrylnitril-Butadien-Copolymerisat sowie mit den anderen Komponenten der Reibbelagsmischung innig vermischt, wobei das Xylol bei 100 mbar und 80°C entfernt wird.

Durch Aushärtung der Reibbelagsmischungen (A), (B) und (C) erfolgt durch ½stündiges Verpressen bei 150°C unter einem Druck von 200 bar. Es wurden Platten von 4 mm Stärke hergestellt, aus denen Normprüfstäbe gefertigt wurden.

Tabelle 2

(I) Herstellung der Reibbelagsmischungen

| | (A) | (B) | (C) |
|---|---|---|---|
| Perbunan® N 3307 NS | 59,1 | 59,1 | 59,1 |
| Phenolformaldehyd-Harz (= Harz 1 aus Tab. 1) | 50,0 | – | – |
| Siloxanmodifizierter Novolak gemäß Bsp. 1 (= Harz 2 aus Tab. 1) | – | 50,0 | – |
| Harz 4 gemäß DOS 23 06 463, S. 5 | – | – | 50,0 |
| Stearinsäure | 2,43 | 2,43 | 2,43 |
| Styrol-Butadien-Harz mit 60 Gew.-% Styrolanteil | 27,3 | 27,3 | 27,3 |
| Kolophonium | 10,9 | 10,9 | 10,9 |
| Kaolin | 118,0 | 118,0 | 118,0 |
| Calciumsilikat | 18,2 | 18,2 | 18,2 |
| Zinkoxid aktiv | 9,1 | 9,1 | 9,1 |
| Eisenoxidpigment | 9,1 | 9,1 | 9,1 |
| Schwefel | 3,64 | 3,64 | 3,64 |
| Cyclohexyl-benzthiazol-sulfenamid | 1,69 | 1,69 | 1,69 |
| Hexamethylentetramingranulat | – | 4,0 | 4,0 |
| Mooney-Viskosität (ML –4 bei 100°C) | 76 | 53 | 51 |

(II) Mechanische Werte, gemessen an Normprüfkörpern nach Vulkanisation bei 150°C/30 Min.:

| | Mischungen | | | | | | | | | | | | | | |
|---|---|---|---|---|---|---|---|---|---|---|---|---|---|---|---|
| | (A) | | | | | (B) | | | | | (C) | | | | |
| | F | D | HD | E | WRF | F | D | HD | E | WRF | F | D | HD | E | WRF |
| | 14,3 | 40 | 67 | 22 | 49,1 | 15,9 | 20 | 70 | 28 | 52,6 | 12,6 | 57 | 64 | 22 | 45,6 |
| HL 120°C/1 Tg | 18,0 | 27 | 74 | 25 | 29,2 | 20,7 | 10 | 78 | 30 | 31,6 | 16,4 | 30 | 70 | 24 | 31,9 |
| HL 120°C/3 Tg | 19,1 | 20 | 75 | 25 | 28,4 | 21,7 | 10 | 78 | 31 | 31,1 | 18,8 | 20 | 74 | 26 | 28,6 |
| HL 120°C/5 Tg | 19,8 | 20 | 75 | 25 | 22,9 | 20,6 | 10 | 79 | 31 | 29,1 | 20,2 | 17 | 74 | 26 | 23,8 |

Zeichenerklärung:

F = Zerreißfestigkeit (MPa).
D = Bruchdehnung (%).
HD = Härte (Shore D).
E = Stoßelastizität (%).
WRF = Weiterreißfestigkeit (N/mm).
HL–120°C = Heißluftalterung bei 220°C.

Reibbelagsqualitäten, die auf Basis der erfindungsmäßen siloxanmodifizierten Novolake gefertigt werden, zeichnen sich durch niedrigere Mischungsviskositäten und damit ein günstigeres Verarbeitungsverhalten im Vergleich zu phenolnovolakhaltigen Reibbelagsqualitäten aus (vgl. Tab. 2 Werte für die Mooney-Viskosität). Weiterhin sind die Zugfestigkeit (F), die Elastizität (E) und die Weiterreißfestigkeit (WRF), die Maße für die Formstabilität des Reibbelages sind deutlich verbessert gegenüber einem Reibbelag auf Basis einer Phenol-Novolak-Silikonharz-Mischung (vgl. Mischung (B) und (C) in Tab. 2,II Die härtende Wirkung der erfindungsgemäßen Harze in Reibbelagsmischungen ist ebenfalls höher als die eines reinen Phenolnovolakes oder einer Phenolnovolak-Silikonharz-Mischung (vgl. HD-Werte in Tabelle 2,II für Mischungen (A), (B) und (C)).

**Patentansprüche**

1. Ein Novolakrest enthaltendes Polysiloxan der Formel

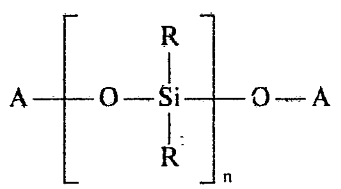

in der

A gleich oder verschieden einen Novolakrest, eine $C_1-C_8$-Alkyl-, eine $C_6-C_{12}$-Aryl- und/oder eine $C_7-C_{12}$ Alkylarylgruppe darstellt, wobei der Novolakrest mindestens einmal vorhanden sein muß,
R gleich oder verschieden eine $C_1-C_8$-Alkyl-, eine $C_6-C_{18}$-Cycloalkylgruppe und/oder eine $C_6-C_{12}$-Aryl- und/oder $C_7-C_{12}$ Alkylarylgruppe bedeutet und
n Zahlen von 3 bis 100 darstellt.

2. Verfahren zur Herstellung des Polysiloxans gemäß Anspruch 1, dadurch gekennzeichnet, daß man ein $C_1-C_8$-Alkyloxi-, $C_6-C_{12}$-Aryloxi- und/oder $C_7-C_{12}$ Alkylaryloxigruppen enthaltendes Polysiloxan mit einem Phenol- und/oder Kresol-Formaldehydharz vom Novolaktyp in Gegenwart eines sauren Umesterungskatalysators bei Temperaturen von 110—180°C umsetzt, wobei das Polysiloxan in Mengen von 20—120 Gew.-Teilen bezogen auf 100 Gew.-Teile Novolak eingesetzt wird und man die entstehenden flüchtigen Anteile abdestilliert.

3. Verfahren gemäß Anspruch 2, dadurch gekennzeichnet, daß man als Ausgangsprodukt ein Polysiloxan der Formel

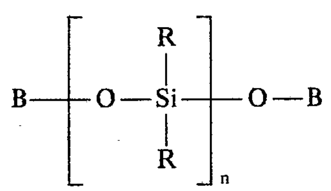

einsetzt, in der

B gleich oder verschieden einen $C_1-C_8$-Alkyl-, $C_6-C_{12}$-Aryl- oder einen $C_7-C_{12}$-Alkylaryl-Rest darstellt,
R gleich oder verschieden einen $C_1-C_8$-Alkyl-, eine $C_6-C_{18}$-Cycloalkyl-, eine $C_6-C_{12}$-Aryl- und/oder eine $C_7-C_{12}$ Alkylarylgruppe,
n Zahlen von 3—100 darstellt.

4. Verfahren gemäß Anspruch 2, dadurch gekennzeichnet, daß man als Ausgangsprodukt ein Phenol- und/oder Kresol-Formaldehydharz vom Novolaktyp einsetzt, welches durch Umsetzung von Phenolen und/oder Kresolen mit wäßrigen Formaldehydlösungen im Molverhältnis 1 : 1,05 bis 1 : 1,4 in Gegenwart eines sauren Katalysators in bekannter Weise hergestellt wird.

5. Verfahren gemäß Anspruch 2, dadurch gekennzeichnet, daß die Umsetzungstemperatur 130—170°C beträgt.

6. Verfahren gemäß Anspruch 2, dadurch gekennzeichnet, daß das Polysiloxan in Mengen von 30—80 Gew.-Teilen bezogen auf 100 Gew.-Teile Novolak eingesetzt wird.

7. Verwendung der Verbindung gemäß Anspruch 1 zur Herstellung von Reibbelägen.

8. Verwendung gemäß Anspruch 7, dadurch gekennzeichnet, daß der Reibbelag hergestellt wird durch Mischen einer Verbindung gemäß Anspruch 1 mit einer formaldehydabspaltenden Verbindung,

Erhitzen auf 140° bis 180° C und Formgebung gegebenenfalls unter einem Druck von 150 bis 250 bar.

9. Verwendung gemäß Anspruch 8, dadurch gekennzeichnet, daß der Reibbelag organische und/oder anorganische Füllstoffe enthält.

**Claims**

1. A polysiloxane containing a novolak residue, of the formula

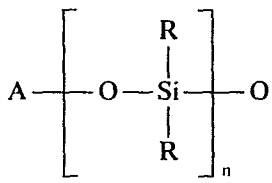

in which

the A's are identical or different and each represents a novolak residue, a $C_1-C_8$-alkyl, a $C_6-C_{12}$-aryl and/or a $C_7-C_{12}$ alkylaryl group, the novolak residue having to be present at least once,
the R's are identical or different and each represents a $C_1-C_8$-alkyl, a $C_6-C_{18}$-cycloalkyl group and/or a $C_6-C_{12}$-aryl and/or $C_7-C_{12}$-alkylaryl group and
n represents numbers from 3 to 100.

2. A process for producing the polysiloxane according to Claim 1, characterised in that a polysiloxane containing $C_1-C_8$ alkyloxy, $C_6-C_{12}$ aryloxy and/or $C_7-C_{12}$ alkyl aryloxy groups is reacted with a phenol-formaldehyde and/or cresol-formaldehyde resin of the novolak type in the presence of an acid transesterification catalyst at temperatures of 110 to 180° C, the polysiloxane being used in quantities of from 20 to 120 parts by weight, based on 100 parts by weight of novolak, and the volatile fractions formed are distilled off.

3. A process according to Claim 2, characterised in that the starting product used is a polysiloxane of the formula

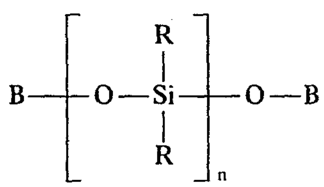

in which

the B's are identical or different and each represents a $C_1-C_8$ alkyl, $C_6-C_{12}$ aryl or $C_7-C_{12}$ alkylaryl radical,
the R's are identical or different and wach represents a $C_1-C_8$ alkyl, a $C_6-C_{18}$ cycloalkyl, a $C_6-C_{12}$ aryl and/or a $C_7-C_{12}$ alkylaryl group, and
n represents numbers from 3 to 100.

4. A process according to Claim 2, characterised in that the starting product used is a phenol-formaldehyde and/or cresolformaldehyd resin of the novolak type which is produced in known manner by reacting phenols and/or cresols with aqueous formaldehyde solution in a molar ration of 1 : 1.05 to 1 : 1.4 in the presence of an acid catalyst.

5. A process according to Claim 2, characterised in that the reaction temperature is 130—170° C.

6. A process according to Claim 2, characterised in that the polysiloxane is used in quantities of 30—80 parts by weight, based on 100 parts by weight of novolak.

7. The use of the compound according to Claim 1 for the production of friction linings.

8. The use according to Claim 7, characterised in that the friction lining is produced by mixing a compound according to Claim 1 with a formaldehyde donor, heating the resulting mixture to a temperature of 140° to 180° C and moulding it, optionally under a pressure of 150 to 250 bars.

9. The use according to Claim 8, characterised in that the friction lining contains organic and/or inorganic fillers.

**Revendications**

1. Polysiloxanne contenant un reste de novolaque et répondant à la formule

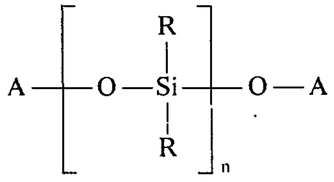

dans laquelle

les symboles A, identiques ou différents, représentent un reste de novolaque, un groupe alkyle en $C_1-C_8$, aryle en $C_6-C_{12}$ et/ou alkylaryle en $C_7-C_{12}$, le reste de novolaque devant être présent au moins une fois,
les symboles R, identiques ou différents, représentent un groupe alkyle en $C_1-C_8$, cycloalkyle en $C_6-C_{18}$ et/ou aryle en $C_6-C_{12}$ et/ou alkylaryle en $C_7-C_{12}$ et
n représente un nombre de 3 à 100.

2. Procédé de préparation du polysiloxanne selon la revendication 1, caractérisé en ce que l'on fait réagir un polysiloxanne contenant des groupes alkyloxy en $C_1-C_8$, aryloxy en $C_6-C_{12}$ et/ou alkylaryloxy en $C_7-C_{12}$ avec une résine phénol- et/ou crésol-formaldéhyde du type novolaque en présence d'un catalyseur de transestérification acide à des températures de 110 à 180° C, en utilisant le polysiloxanne en quantité de 20 à 120 parties en poids pour 100 parties en poids de la novolaque, et on distille les fractions volatiles formées.

3. Procédé selon la revendication 2, caractérisé en ce que l'on utilise en tant que produit de départ un polysiloxanne de formule

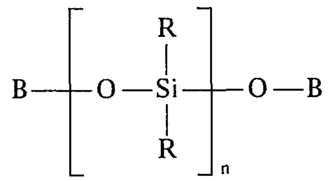

dans laquelle

les symboles B, identiques ou différents, représentent un groupe alkyle en $C_1-C_8$, aryle en $C_6-C_{12}$ ou alkylaryle en $C_7-C_{12}$,
les symboles R, identiques ou différents, représentent un groupe alkyle en $C_1-C_8$, cycloalkyle en $C_6-C_{18}$, aryle en $C_6-C_{12}$ et/ou alkylaryle en $C_7-C_{12}$,
n représente un nombre de 3 à 100.

4. Procédé selon la revendication 2, caractérisé en ce que l'on utilise en tant que produit de départ une résine phénol- et/ou crésol-formaldéhyde du type novolaque, qui a été préparée par réaction d'un phénol et/ou d'un crésol avec une solution aqueuse de formaldéhyde dans un rapport molaire de 1 : 1,05 à 1 : 1,4 en présence d'un catalyseur acide de manière connue en soi.

5. Procédé selon la revendication 2, caractérisé en ce que la température de réaction est de 130 à 170° C.

6. Procédé selon la revendication 2, caractérisé en ce que l'on utilise le polysiloxanne en quantité de 30 à 80 parties en poids pour 100 parties en poids de la novolaque.

7. Utilisation du composé selon la revendication 1, pour la préparation de garnitures de friction.

8. Utilisation selon la revendication 7, caractérisée en ce que l'on prépare la garniture de friction par mélange d'un composé selon la revendication 1, avec un composé libérant du formaldéhyde, chauffage à une température de 140 à 180° C et façonnage le cas échéant sous une pression de 150 à 250 bars.

9. Utilisation selon la revendication 8, caractérisée en ce que la garniture de friction contient des matières de charges organiques et/ou minérales.